# EUROPÄISCHE PATENTANMELDUNG

(11) **EP 1 314 959 A1**
(43) Veröffentlichungstag der Anmeldung: **28.05.2003**
(21) Anmeldenummer: 01127378.6
(22) Anmeldetag: 22.11.2001
(51) Int. Cl.: G01C 1/04

(54) **Elektronische Anzeige- und Steuervorrichtung für ein Messgerät**

(71) Anmelder: Leica Geosystems AG, 9435 Heerbrugg (CH)
(72) Erfinder: Kern, Gerhard, 6840 Götzis (AT); Schneider, Klaus, 6850 Dornbirn (AT); Vorburger, Pius, 9442 Berneck (CH)
(74) Vertreter: Kaminski, Susanne

(57) **Zusammenfassung**

Durch eine Trennung von Aufnahmemitteln (1a,1d) und Darstellungsmitteln (3) kann ein Messgerät, insbesondere ein geodätisches Messgerät (8,8'), in ergonomisch vorteilhafter Weise bedient werden.

Ermöglicht wird dies durch die Verwendung elektronischer Aufnahmemittel (ld) für ein Teleskop (1) als Richtmittel anstelle eines Einblicks (1c) für das menschliche Auge. Der solchermassen aufgenommene Messbereich wird durch die gegenüber der optischen Achse der Aufnahmemittel (1a,1d) bewegbare Darstellungsmittel (3) angezeigt.

Durch eine geeignete Zusammenfassung der Darstellungsmittel (3) mit den Mitteln zur Eingabe von Daten kann ein eigenes Handhabungsmodul (2) geschaffen werden, das auch unabhängig und abgesetzt vom Messgerät verwendet werden kann und mit diesem über Kommunikationsmittel (5) in Verbindung steht.

Die Verwendung eines solchen Moduls zusammen mit mehreren Messgeräten als Sensorkomponenten erlaubt die Gestaltung fernbedienbarer geodätischer Vermessungssysteme.

## Beschreibung

Die Erfindung betrifft eine elektronische Anzeige- und Steuervorrichtung für ein Messgerät nach dem Oberbegriff des Anspruchs 1 sowie ein geodätisches Messgerät nach dem Oberbegriff des Anspruchs 11, eine Modulkomponente nach Anspruch 23 und ein geodätisches Vermessungssystem nach Anspruch 24.

Für die Aufnahme von Eigenschaften definierter Punkte in einer Messumgebung, insbesondere von Daten mit räumlichem Bezug, sind seit der Antike eine Vielzahl von Messvorrichtungen bekannt. Als räumliche Standarddaten werden dabei der Ort eines Messgerätes nebst evtl. vorhandener Referenzpunkte, sowie Richtung, Entfernung und Winkel zu Messpunkten aufgenommen. Bisherige Verbesserungen betrafen meist den Einsatz neuer technischer Verfahren mit erhöhter Genauigkeit und Schnelligkeit.

Allerdings erfordern derartige Vorrichtungen des Stands der Technik immer noch einen unmittelbar am Gerät arbeitenden Benutzer, der das Messgerät meist mit Hilfe von speziellen Richtmitteln, wie z.B. optischen Teleskopen, auf die anzumessenden Punkte einrichtet. Ein allgemein bekanntes Beispiel für solche Messgeräte stellt der Theodolit dar. Eine Übersicht über geodätische Messvorrichtungen des Stands der Technik bieten "Elektronische Entfernungs- und Richtungsmessung" von R. Joeckel und M. Stober, 4. Auflage, Verlag Konrad Wittwer, Stuttgart 1999 und "Electronic Distance Measurement" von J.M. Rüeger, 4. Auflage, Springer-Verlag, Berlin, Heidelberg 1996.

Aufgrund des meist für das menschliche Auge und den Messvorgang gemeinsam ausgelegten Strahlengangs erfordert der Einsatz dieser Messgeräte eine Anpassung der Körperhaltung an die Ausrichtung der Richtmittel. Als nachteilig stellt sich die damit verbundene, bei extremen Einsatzbereichen oft als belastend empfundene Körperhaltung und die Notwendigkeit der direkten Arbeit am Gerät heraus. So können Messgeräte diesen Typs nur dort betrieben werden, wo die Bedürfnisse der menschlichen Präsenz erfüllt werden. Ein Einsatz unter beengten Verhältnissen oder an unzugänglichen Orten, wie z.B. an Hochhausfassaden oder im Gebirge, ist somit nur eingeschränkt möglich. Auch ist den Einwirkungen auf und durch den menschlichen Körper Rechnung zu tragen. So werden Anwendungen in gefährlichen oder belastenden Umweltsituation nicht oder nur eingeschränkt möglich, z.B. in der Nähe von Hochöfen oder in kontaminierten Bereichen; auf der anderen Seite verbietet sich der Einsatz mit nicht abgeschottetem menschlichen Körper unter speziellen Umweltanforderungen, z.B. unter Reinstraumbedingungen.

Ein weiterer Nachteil stellt die Notwendigkeit dar, dass jedes Gerät jeweils über eigene Richtmittel verfügen und von einer Person mit einer speziellen Ausbildung bedient werden muss, was die Zahl der nutzbaren Geräte unter Kosten- und Verfügbarkeitsgesichtspunkten limitiert.

Autonome oder teilweise fernsteuerbare Systeme des Stands der Technik sind dagegen nur für hochspezialisierte Funktionen einsetzbar. Ein Beispiel hierfür stellt die Überwachung von Konstruktionen, z.B. von Brückenpfeilern, dar. Eine frei steuer- und ausrichtbare Mess- oder Überwachungsfunktionalität konnte bisher nicht realisiert werden.

Aus den Patentschriften JP 02130409 A und JP 03167412 A ist die Kombination eines Theodoliten mit einer Video-Kamera bekannt, mit der schnelle und genaue dreidimensionale Messungen ermöglicht werden sollen. Hierbei werden durch zwei Theodolit-Video-Kamera-Kombinationen zeitgleich Aufnahmen von Bildern durch die jeweilige Kamera und Winkelmessungen mittels Theodoliten vorgenommen. Dabei sind jeweils die Achsen von Video-Kamera und Theodolit parallel, so dass die Winkelmessung eines Theodoliten mit den durch die Kamera dieser Kombination aufgenommenen Bildern verknüpft ist. Aus mindestens zwei unter verschiedenen Winkeln aufgenommenen Bildern können die dreidimensionalen Positionen der abgebildeten Objekte abgeleitet werden. Da die Video-Kamera lediglich zur zusätzlichen Aufnahme von Bildern bei ansonsten unverändertem Theodoliten verwendet wird, treten die oben beschriebenen Nachteile auch bei dieser Lösung unverändert auf.

Die Erfindung besitzt somit die Aufgabe, eine Vorrichtung bereit zu stellen, welche die Anforderungen an Raum und Umweltbedingungen für den Nutzer eines Messgerätes deutlich günstiger gestaltet. Insbesondere soll eine beliebige Ausrichtung des Messgerätes ohne ergonomisch negative Folgen und mit erleichterter Handhabbarkeit bewirkt werden.

Diese Aufgabe wird erfindungsgemäss durch die kennzeichnenden Merkmale der Ansprüche 1 bzw. 11 gelöst.

Eine weitere Aufgabe der Erfindung besteht darin, den Einsatzbereich der Messgeräte, insbesondere hinsichtlich bisher unzugänglicher Strukturen oder für Spektralbereiche ausserhalb des sichtbaren Bereichs, zu erweitern.

Eine weitere Aufgabe der Erfindung besteht in der Bereitstellung von Messgeräten, die auch unter Bedingungen verwendet werden können, die den Einsatz eines unmittelbar am Gerät arbeitenden Benutzers ausschliessen.

Weitere Aufgaben der Erfindung sind die bauliche Vereinfachung des Messgerätes, eine erhöhte Unabhängigkeit der Bedienung von der Witterung und die Vereinfachung des Messvorganges.

Diese Aufgaben werden erfindungsgemäss durch Merkmale der Unteransprüche gelöst. Darüber hinaus ergeben sich vorteilhafte und alternative Ausgestaltungen und Weiterbildungen der Vorrichtungen aus den Merkmalen der Unteransprüche.

Schliesslich besteht eine Aufgabe der Erfindung darin, einen gleichzeitigen, gegebenenfalls verknüpften Betrieb mehrerer Messgeräte bei gleichzeitig deutlich verringertem Bedarf an speziell qualifiziertem Personal zu ermöglichen.

Diese Aufgabe wird erfindungsgemäss durch die Merkmale des Anspruchs 24 gelöst.

Der Erfindung liegt die Idee zugrunde, durch eine Trennung von Aufnahme- und Darstellungsmitteln neue Gestaltungs- und Handhabungsoptionen für Messgeräte zu erschliessen. Ermöglicht wird dies durch die Verwendung elektronischer Aufnahmemittel als Richtmittel für ein Teleskop anstelle eines Einblicks für das menschliche Auge.

Die Erfindung betrifft dabei im weiteren Sinn alle Messgeräte, die durch direkt vom Menschen zu handhabende Richtmittel auf Messpunkte optisch ausgerichtet werden.

Unter dem Begriff "geodätisches Messgerät" soll in diesem Zusammenhang verallgemeinernd stets ein Messinstrument verstanden werden, das über Vorrichtungen zur Messung oder Überprüfung von Daten mit räumlichem Bezug verfügt. Insbesondere betrifft dies die Messung von Entfernung und/oder Richtung bzw. Winkeln zu einem Bezugs- oder Messpunkt. Darüber hinaus können jedoch noch weitere Vorrichtungen, z.B. Komponenten zur satellitengestützten Ortsbestimmung (bspw. GPS oder GLONASS), vorhanden sein, die für ergänzende Messungen oder Datenaufnahmen verwendet werden können. Insbesondere sollen hier unter einem solchen geodätischen Messgerät Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung; diese Systeme werden hiermit ebenfalls unter dem Begriff "geodätisches Messgerät" erfasst.

Erfindungsgemäss wird die bisherige, alleinige Verwendung eines durch das menschliche Auge mit einem direkten Strahlengang zum Messpunkt auszurichtenden Fernrohr ersetzt oder ergänzt. Das Bild des anzurichtenden Messpunktes wird über eine Optik auf elektronische Aufnahmemittel abgebildet und das Bild über Darstellungsmittel sichtbar gemacht. Die Ausrichtung des Messgerätes oder des Theodoliten erfolgt nun durch Positionieren einer Positionsmarke auf einem Bildschirm. Die Positionsmarke kann durch verschiedene Vorrichtungen, wie sie z.B. auch im Computerbereich zur Steuerung von Bildschirmzeigern üblich sind, bewegt werden. Je nach gewähltem Modus kann durch Verschieben der Positionsmarke eine Nachführung bzw. Ausrichtung des Messgerätes und/oder die Initialisierung eines Messvorgangs zu dem durch die Positionsmarke definierten Punkt bewirkt werden.

Dabei können beispielsweise verschiedene Messpunkte festgelegt werden, die dann nach Abschluss der Eingabe automatisch abgefahren werden oder aber es wird direkt durch die Positionierung der Positionsmarke ein Messvorgang für die jeweils eingestellten, aufzunehmenden Parameter zu dem aktuellen Punkt durchgeführt.

Die Daten und Ergebnisse des Messvorgangs können auf dem Bildschirm dargestellt werden. Diese Darstellung ist dabei in Form einer eingeblendeten Schrift oder auch in eigenen Darstellungsfeldern möglich. Letztere können als getrennte Teile des Bildschirms ausgeführt sein, die beispielweise vergrösserte Bildausschnitte oder Referenzpunkte abbilden, zu denen eine Ausrichtung erfolgen soll.

Die Verwendung eines berührungssensitiven Flachbildschirmes erlaubt darüber hinaus auch den Verzicht auf spezielle Eingabemittel, so dass die Darstellungs- und Eingabemittel kompakt und modular ausgeführt werden können. Eine weitere Realisierungsmöglichkeit der Darstellung- bzw. Eingabemittel besteht in der Anbindung an auch für andere Anwendungen nutzbare Geräte. Beispielsweise kann über eine Schnittstelle für Kommunikationsnetze oder die Verwendung eines Standardcomputers, insbesondere eines tragbaren Laptops oder Notebooks, auf weitere zusätzliche Funktionalitäten zurückgegriffen werden. Durch eine Verwendung von Rechnern kann zusätzliche, gegebenenfalls universal einsetzbare Software zum Einsatz gebracht werden. Ausserdem können aufgenommenen Messdaten sofort in den verfügbaren Speichern abgelegt und nach Trennung vom geodätischen Messgerät auch in anderen Applikationen verwendet werden. Diese Vorteile können mit einer Internetanbindung kombiniert werden, durch die eine ergänzende Datenübertragung oder Fernsteuerung möglich wird.

Die erfolgte Auftrennung des bisher mit einem direkten Einblick versehenen Teleskops in Aufnahme- und Darstellungsmittel ermöglicht es dem Benutzer, unabhängig von der Ausrichtung der Aufnahmemittel, eine bequeme, ergonomisch günstige Position einzunehmen. Auch kann ein Messgerät in Bereichen plaziert werden, die bisher nicht nutzbar waren, z.B. in Ecken oder engen Durchlässen.

Werden die Darstellungs- und Eingabemittel modular ausgestaltet, können sie baulich vom eigentlichen geodätischen Messgerät getrennt werden. Eine Verbindung zum geodätischen Messgerät, das nun im wesentlichen nur noch aus einem Gehäuse und den Komponenten des Objektivs mit Sensorelementen zusammen mit den zugehörigen Steuerkomponenten besteht, kann über Kommunikationsmittel hergestellt werden, z.B. Draht- oder Funkverbindungen. In diesem Zusammenhang sollen im folgenden unter Drahtverbindungen stets alle flexiblen Kommunikationsverbindungen verstanden werden, die zur Übertragung von Daten dienen, insbesondere jedoch Glasfaser- und Kupferkabel.

Diese Auftrennung erlaubt nun die Steuerung einer Vielzahl von geodätischen Messgeräten als reine Sensoreinheiten mittels einer zentralen Steuer- und Auswerteeinheit. Letztere kann vor der Witterung geschützt z.B. in einem Fahrzeug untergebracht werden. Neben den Vorteilen für Gerät und Bediener erlaubt die Verlastung in einem Fahrzeug auch die Verwendung von weiteren Zusatzkomponenten, die bei einer Anbringung am einzelnen Messgerät dessen Gewicht prohibitiv erhöhen würden. Die Verwendung mehrerer Sensoreinheiten erlaubt vereinfachte, gleichzeitige Messungen zu gemeinsamen oder verschiedenen Punkten, eine Ausrichtung der geodätischen Messgeräte untereinander oder auch einen überschlagenden Einsatz, bei dem stets nur ein Teil der Sensoreinheiten für Messungen verwendet wird, während der andere Teil an andere Standorte verbracht wird. Die Darstellung der Messbereiche von gleichzeitig genutzten Sensoreinheiten kann nacheinander auf dem gleichen Bildschirm erfolgen oder aber auch zeitgleich auf einem Bildschirm in eigenen Darstellungsbereichen, z.B. in Fenster- oder Split-Screen-Technik.

Auch wird durch diese Trennung ein Einsatz in Bereichen möglich, die bisher nicht zugänglich waren. Als Beispiele können Häuserfronten, Zonen in unmittelbarer Nähe von Hochöfen oder kontaminierte Bereiche industrieller Prozesse dienen.

Aufnahmeseitig wird durch den Wegfall der Notwendigkeit, direkt den sichtbaren Spektralbereich verwenden zu müssen eine Fülle von neuen Anwendungsmöglichkeiten ermöglicht.

Die Aufnahmemittel können unmittelbar auf verschiedene Spektralbereiche optimiert werden. Einsetzbar sind sowohl Systeme, die den aufnehmbaren spektralen Bereich erweitern, wie z.B. Wärmebild- oder andere Infrarotsysteme, als auch Systeme, die diesen Bereich einschränken, wie z.B. spektrale Filter, die gezielt unerwünschte Bereiche des Spektrums oder bestimmte Polarisationsrichtungen ausblenden. Die Einschränkung des Aufnahmebereichs kann beispielsweise bei stark reflektierendem Hintergrund, wie z.B. Gewässeroberflächen oder Hochhausfassaden, vorteilhaft sein. Für eine Aufnahme im sichtbaren Spektralbereich bieten sich allgemein in anderen Bereichen verwendete Systeme an, wie z.B. Video- oder CCD-Kameras. Die Verwendung einer der allgemein bekannten Autofokusvorrichtungen in den Aufnahmemitteln erlaubt die automatisierte Scharfstellung des erfassten Bildes auch ohne direkten Einblick.

Die erfindungsgemässe elektronische Anzeige- und Steuervorrichtung, ein erfindungsgemässer Theodolit und ein geodätisches Vermessungssystem werden nachfolgend anhand von in der Zeichnung schematisch dargestellten Ausführungsbeispielen rein beispielhaft näher beschrieben. Im einzelnen zeigen
- Fig.1a-b: die Darstellung eines Teleskops nach dem Stand der Technik und eines erfindungsgemässen Teleskops für ein Messgerät;
- Fig.2: die Darstellung der Komponenten einer erfindungsgemässen elektronischen Anzeige- und Steuervorrichtung;
- Fig.3: die Darstellung der erfindungsgemässen Zusammenfassung verschiedener Komponenten in einem berührungssensitiven Flachbildschirm;
- Fig.4a-b: eine Ausführungsform der erfindungsgemässen elektronischen Anzeige- und Steuervorrichtung zur Verwendung in einem Theodoliten;
- Fig.5: eine Darstellung eines erfindungsgemässen geodätischen Messgeräts mit Trennung von Sensor-und Verarbeitungseinheit und
- Fig.6: die Darstellung der Verwendung eines erfindungsgemässen geodätischen Vermessungssystems mit mehreren geodätischen Messgeräten zur überschlagenden Vermessung.

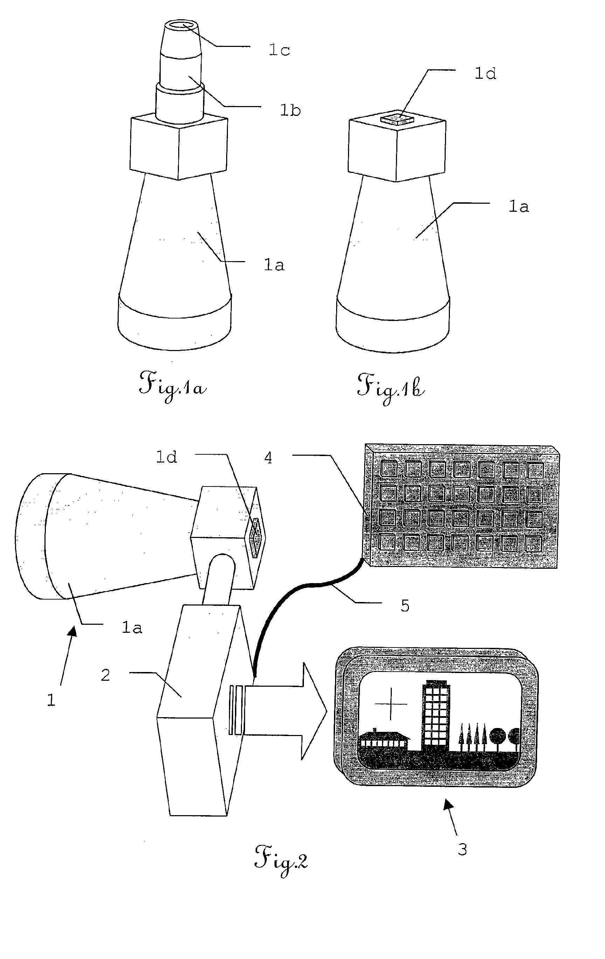

Fig.1a-b zeigt die figürliche Darstellung von Teleskopen, wie sie zur Ausrichtung von verschiedenen Typen von Messgeräten und auch zur Aufnahme von Messdaten verwendet werden können. Dabei stellt Fig.1a ein Teleskop nach dem Stand der Technik dar, das aus einem Objektivteil 1a und einem Okularteil 1b besteht. Durch den am Okularteil 1b befindlichen Einblick 1c wird das gesamte Teleskop und ein damit verbundenes Messgerät als Teil eines Messvorgangs oder zur Vorbereitung desselben ausgerichtet.

Beim in Fig.1b dargestellten erfindungsgemässen Teleskop bilden ein Objektivteil 1a zusammen mit einer elektronischen Aufnahmevorrichtung 1d die für den Messvorgang notwendigen Aufnahmemittel. Der direkte Einblick für das menschliche Auge wird bei ansonsten im wesentlichen unveränderter Objektivoptik durch geeignete Mittel zur Bildaufnahme, z.B. einer Video- oder CCD-Kamera, ersetzt. Diese elektronischen Mittel erlauben neben konstruktiver Vorteile auch eine selektive oder erweiterte Ausnutzung von Spektralbereichen, die dem menschlichen Auge nicht direkt zugänglich sind.

Beide in Fig.1a-b dargestellten Teleskope können darüber hinaus weitere Instrumente mit einem, zumindest teilweise, identischen Strahlgang oder in koaxialer Anordnung aufweisen. Durch den Wegfall des direkten Einblicks ergeben sich konstruktive Vorteile durch den verringerten Platzbedarf, wie auch durch die nun nicht mehr notwendigen Restriktionen hinsichtlich des menschlichen Auges, z.B. durch das Erfordernis des Augenschutzes bei Laserstrahlung.

Die Komponenten einer erfindungsgemässen elektronischen Anzeige- und Steuervorrichtung sind in Fig.2 exemplarisch dargestellt. Als Aufnahmemittel dient eine Teleskopkombination aus Objektivteil 1a und elektronischer Aufnahmevorrichtung 1d, die in diesem Beispiel direkt mit einer gegenüber der Teleskopkombination 1 schwenkbaren Darstellungseinheit 2, die geeignete Darstellungsmittel aufnimmt, verbunden sind. Ein Ausschnitt des von der Teleskopkombination 1 erfassten Messbereichs wird auf einem in der Darstellungseinheit 2 integrierten Bildschirm 3 als Darstellungsmittel dargestellt, dessen Bild hier aus Gründen der besseren Sichtbarkeit separat und gedreht abgebildet wird. Die Eingabe von Daten zur Steuerung der Teleskopkombination 1 mit der Darstellungseinheit 2 und des Messvorgangs erfolgt beispielhaft über eine Tastatur 4 als Eingabemittel. Alternativ oder ergänzend können jedoch auch andere Eingabe- oder Kontrollmittel, z.B. ein Joy-Stick, Trackball oder andere bewegungssensitive Vorrichtungen, verwendet werden. Die Tastatur 4 ist über ein Kabel 5 mit der Darstellungseinheit 2 verbunden. Eine andere Möglichkeit der Verbindung bietet jedoch auch die drahtlose Kommunikation, z.B. durch Verwendung von Infrarot- oder Funk-Fernbedienungen. Über die Tastatur 4 werden die Daten bzgl. des Messvorgangs und für dessen Steuerung eingegeben. Beispielsweise können für die Messungen laufende Nummern, die aktuelle Projektbezeichnung oder die Kennung des Nutzers als Hintergrunddaten des Messvorgangs eingegeben werden.

Über die Tastatur 4 kann darüber hinaus auch der Messvorgang direkt gesteuert werden, indem die notwendigen Kommandos, beispielsweise durch Positionierung eines Cursors, eingeben werden. Durch geeignete Steuerungsmittel wird die Teleskopkombination 1 dann so ausgerichtet und eingestellt, dass der Messvorgang durchgeführt werden kann. Zur Steuerung können allgemein bekannte Mittel wie z.B. Servomotoren oder andere Aktuatoren verwendet werden.

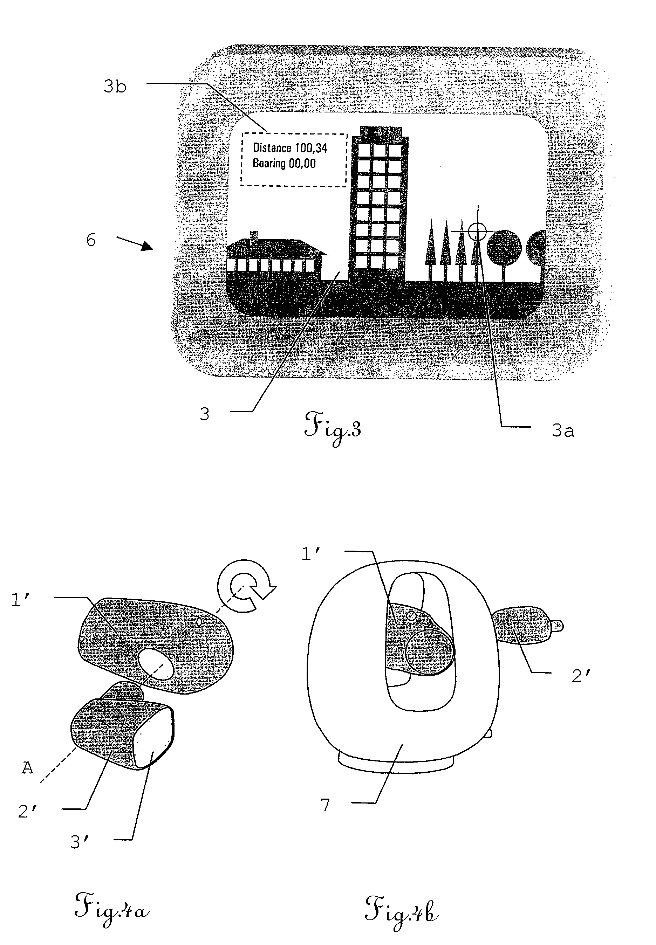

Eine besonders vorteilhafte Ausgestaltung stellt die in Fig.3 gezeigte Zusammenfassung verschiedener Komponenten in einem berührungssensitiven Flachbildschirm 6 dar. Beispielsweise können die Funktionen von Bildschirm 3 und Tastatur in diesem Element zusammengefasst werden. Der Flachbildschirm 6 besitzt einen Bildschirm 3 als Darstellungsmittel, der über Unterteilungen in weitere Darstellungsfelder 3b verfügt. In diesen Darstellungsfeldern 3b können z.B. vergrösserte Ausschnitte des Messbereichs oder auch, wie hier gezeigt, Daten des Messvorgangs dargestellt werden.

Der Messvorgang wird über eine bewegbare Positionsmarke 3a gesteuert, die innerhalb des Bildschirms 3 bewegt werden kann. In dieser Ausführungsform des berührungssensitiven Flachbildschirms 6 genügt eine Berührung mit dem Finger oder einem Gegenstand, um die Positionsmarke 3a verschieben zu können. Je nach konkreter Ausgestaltung oder gewähltem Modus kann durch eine Verschiebung der Positionsmarke 3a bereits ein Messvorgang ausgelöst werden. In der gezeigten Szenerie würde somit eine Bewegung der Positionsmarke 3a von den Bäumen zur Spitze des Hochhauses als Endposition automatisch eine Messung von Entfernung und Richtung zur Spitze des Hochhauses auslösen. Ergänzend können beispielsweise noch weitere Daten aufgenommen werden. Z.B. ist es möglich, den Winkel und die absolute Höhendifferenz zwischen beiden Punkten zu vermessen bzw. zu berechnen und anzugeben.

Eine für Verwendungen in einem Theodoliten oder einem anderen geodätischen Messgerät geeignete Ausführungsform der Erfindung ist in Fig.4a-b dargestellt.

Fig.4a zeigt spezielle Ausgestaltungen der beiden Elemente Teleskopkombination 1' und Darstellungseinheit 2', die um eine Achse A gegeneinander verdrehbar gelagert sind. Damit kann der Bildschirm 3', der beispielsweise auch berührungssensitiv ausgestaltet werden kann, so dass eine eigene Tastatur entfällt, gegenüber der Ausrichtung der Teleskopkombination 1' unabhängig geschwenkt werden. Diese Handhabungsmöglichkeit bietet insbesondere ergonomische Vorteile, da unabhängig von der Ausrichtung des Theodoliten stets eine bequeme Arbeitshaltung des Bedieners bewahrt werden kann.

In Fig.4b ist die Anordnung der beiden Komponenten Teleskopkombination 1' und Darstellungseinheit 2' in einem Theodolitengehäuse 7 dargestellt. Die zur Ausrichtung und Bewegung der Teleskopkombination 1' erforderlichen Steuerungsmittel sind hier exemplarisch im Theodolitengehäuse 7 untergebracht.

Eine weitere erfindungsgemässe Ausführungsform eines geodätischen Messgeräts 8 mit einem modular ausgestalteten berührungssensitiven Flachbildschirm 6 zeigt Fig.5. Das geodätische Messgerät 8 ist mit dem Flachbildschirm 6 über eine drahtlose Kommunikationsverbindung verbunden, so dass beide Komponenten auch in grösser Entfernung voneinander eingesetzt werden können. Dabei wird die Teleskopeinheit 1' des geodätischen Messgeräts 8 über die vermittels Flachbildschirm 6 übermittelten Kommandos ferngesteuert. Der erfasste Messbereich 12 wird wiederum auf den Flachbildschirm 6 übertragen und dort dargestellt.

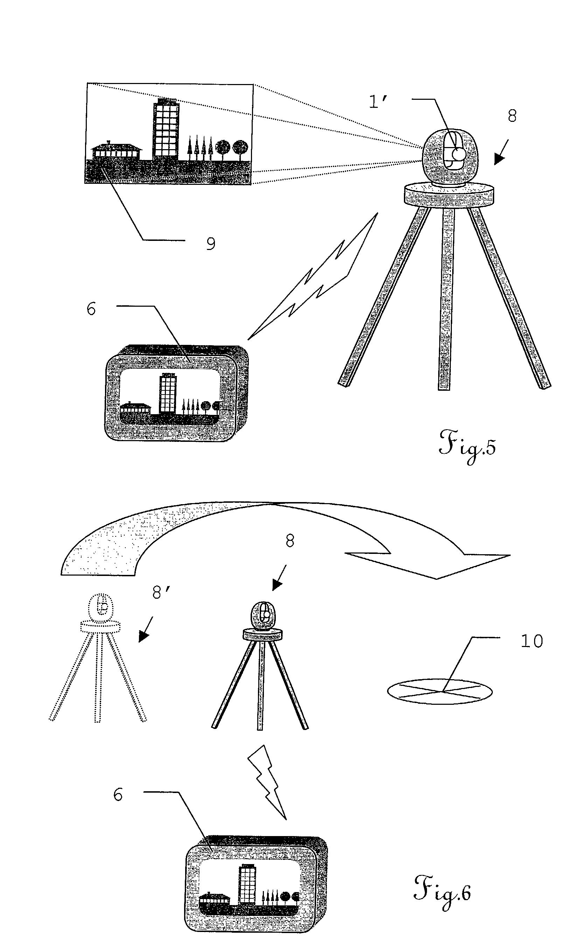

Die Verwendung von mehreren solchermassen gestalteten geodätischen Messgeräten 8, 8' im Rahmen eines erfindungsgemässen geodätischen Vermessungssystems ist in Fig.6 schematisch gezeigt. In einem überschlagenden Verfahren wird eine geodätische Vermessung abwechselnd mit den geodätischen Messgeräten 8 und 8' durchgeführt. Während zwischen dem berührungssensitiven Flachbildschirm 6 als modularem Eingabemittel und dem geodätischen Messgerät 8 ein Funkkontakt besteht und eine Messung durchgeführt wird, kann das zweite geodätische Messgerät 8' bzw. auch weitere oder andere Sensoreinheiten an einen neuen Referenzpunkt 10 verbracht werden. Bei diesem erfindungsgemässen System können die geodätischen Messgeräte 8, 8' oder auch andere, ähnlich gestaltete Sensoreinheiten unter Verzicht auf eigene Darstellungs- und Eingabemittel einfach und damit kostengünstig gehalten werden. Zur Bedienung der Eingabemittel wird nur noch eine Person benötigt, die abgesetzt und vor Witterungseinflüssen geschützt plaziert werden kann. Aufgrund des überschlagenden Einsatzes, der hinsichtlich der einfachen Verbringung der Sensoreinheiten keine speziellen Ausbildungsanforderungen an das Personal stellt, und der über ein integriertes Lot möglichen, ferngesteuerten Feinpositionierung können Vermessungen schneller und damit kostengünstiger als bisher durchgeführt werden.

Es versteht sich, dass die dargestellten Figuren eine von vielen Ausführungsformen darstellen und der Fachmann alternative Realisierungsformen, z.B. unter Verwendung anderer optischer Komponenten bzw. Sensoreinheiten, abweichender Strahlgänge oder anderer Bedien- und Eingabeelemente ableiten kann. Insbesondere die Beschreibung und Darstellung eines geodätischen Messgeräts oder eines Theodoliten ist nur als vereinfachende und exemplarische Darstellung zu verstehen, der keinerlei ausschliessender oder einschränkender Charakter zukommt. Gleichermassen kann die erfindungsgemässe Vorrichtung auf ähnliche Messeinrichtungen mit abweichendem Funktionalitätsumfang, wie z.B. Totalstationen oder reine Entfernungsmesser, bzw. auf Messeinrichtungen mit ähnlicher, aber spezialisierter Funktionalität, wie z.B. Komponenten militärischer Richtkreise oder industrieller Überwachungsanlagen, übertragen werden.

## Patentansprüche

1. Elektronische Anzeige- und Steuervorrichtung für ein, insbesondere geodätisches, Messgerät
mit elektronischen Darstellungsmitteln (3) zur visuellen Darstellung eines durch Aufnahmemittel (1a,1d) erfassten Messbereichs (9),
mit Eingabemitteln zur Eingabe von Daten zur Steuerung der Aufnahmemittel (1a,1d) und eines Messvorgangs und
mit jeweils einer Steuereinrichtung zur Steuerung der Aufnahmemittel (1a,1d) und des Messvorganges,
**dadurch gekennzeichnet, dass**
durch die Darstellungsmittel (3) wenigstens eine Positionsmarke (3a), vorzugsweise ein Fadenkreuz, bereitgestellt wird, und
durch eine Positionierung der Positionsmarke (3a) wenigstens ein Parameter des Messvorganges, insbesondere die Festlegung eines Messpunkts zur räumlichen Vermessung, bestimmt wird.

2. Elektronische Anzeige- und Steuervorrichtung nach Anspruch 1,
**dadurch gekennzeichnet, dass**
die Positionsmarke (3a) durch die Eingabemittel innerhalb der visuellen Darstellung (3), vorzugsweise in diskreten Schritten, insbesondere pixelweise, positionierbar ist.

3. Elektronische Anzeige- und Steuervorrichtung nach Anspruch 1 oder 2,
**dadurch gekennzeichnet, dass**
durch die Positionierung der Positionsmarke (3a) wenigstens ein Teil des Messvorgangs ausgelöst und/oder die Steuerung der Aufnahmemittel (1a,1d) bewirkt wird.

4. Elektronische Anzeige- und Steuervorrichtung nach einem der vorangehenden Ansprüche,
**dadurch gekennzeichnet, dass**
die visuelle Darstellung des erfassten Messbereichs oder von Teilen des Messbereichs durch die Aufnahmemittel (1a,1d) und/oder Darstellungsmittel (3) verkleinerbar, vergrösserbar und/oder in seiner Auflösung veränderbar ist, insbesondere durch eine Variation der, vorzugsweise elektronischen, Zuordnung der Daten von Pixeln der Aufnahmemittel (1a,1d) zu Pixeln der Darstellungsmittel (3).

5. Elektronische Anzeige- und Steuervorrichtung nach einem der vorangehenden Ansprüche,
**dadurch gekennzeichnet, dass**
die Aufnahmemittel (1a,1d), vorzugsweise unter Verwendung eines Autofokus, wenigstens eines der folgenden Mittel beinhalten
- CCD-Kamera,
- CMOS-Kamera,
- Video-Kamera,
- Restlichtverstärker,
- Wärmebildkamera,
- Spektral selektiver Detektor,
- Spektraler Filter.

6. Elektronische Anzeige- und Steuervorrichtung nach einem der vorangehenden Ansprüche,
**dadurch gekennzeichnet, dass**
durch eine automatische Nachführung der Aufnahmemittel (1a,1d) der zu erfassende Messbereich (9) so verändert werden kann, dass die Positionsmarke (3a) an einer ausgezeichneten Stelle in der visuellen Darstellung des zu erfassenden Messbereichs (9), insbesondere in dessen Mitte, positioniert wird.

7. Elektronische Anzeige- und Steuervorrichtung nach einem der vorangehenden Ansprüche,
**dadurch gekennzeichnet, dass**
die Darstellungsmittel (3) wenigstens eines der folgenden Mittel beinhaltet
- LCD-Display,
- Kathodenstrahlröhre,
- Flachbildschirm,
- Schnittstelle zu Kommunikationsnetzen,
- Elektronischer Rechner mit Bildschirm, vorzugsweise tragbarer Laptop.

8. Elektronische Anzeige- und Steuervorrichtung nach einem der vorangehenden Ansprüche,
**dadurch gekennzeichnet, dass**
die Eingabemittel wenigstens eines der folgenden Mittel beinhalten
- berührungssensitiven Bildschirm,
- berührungssensitives Eingabefeld,
- Tastaturfeld (4),
- Joy-Stick,
- Trackball,
- Computer-Maus,
- Schnittstelle zu Kommunikationsnetzen,
- Elektronischer Rechner mit Eingabevorrichtung, vorzugsweise tragbarer Laptop.

9. Elektronische Anzeige- und Steuervorrichtung nach einem der vorangehenden Ansprüche,
**dadurch gekennzeichnet, dass**
die elektronischen Darstellungsmittel (3) und die Eingabemittel in einer Komponente, vorzugsweise einem berührungssensitiven Flachbildschirm (6), zusammengefasst sind.

10. Elektronische Anzeige- und Steuervorrichtung nach einem der vorangehenden Ansprüche,
**dadurch gekennzeichnet, dass**
die Aufnahmemittel (1a,1d) als eigenständiges Modul ausgebildet sind und mit den anderen Komponenten über eine Drahtverbindung (5) oder eine Funkverbindung verbunden sind.

11. Geodätisches Messgerät (8,8'),
mit Richtmitteln zum Ausrichten des geodätischen Messgeräts (8,8') auf ein in einem Messbereich (9) zu erfassendes Ziel,
mit einer Messvorrichtung zur Durchführung eines geodätischen Messvorgangs,
mit Eingabemitteln zur Eingabe von Daten zur Steuerung des Messvorgangs und
mit einer Steuereinrichtung zur Steuerung des Messvorganges,
**dadurch gekennzeichnet, dass**
die Richtmittel elektronische Aufnahmemittel (1a,1d) zur Erfassung eines Messbereichs (9) und elektronische Darstellungsmittel (3) zur visuellen Darstellung von zumindest Ausschnitten des Messbereichs (9) aufweisen und
durch die Darstellungsmittel (3) wenigstens eine Positionsmarke (3a), vorzugsweise ein Fadenkreuz, bereitgestellt wird,

12. Geodätisches Messgerät (8,8') nach Anspruch 11,
**dadurch gekennzeichnet, dass**
die Positionsmarke (3a) durch die Eingabemittel in der visuellen Darstellung (3), vorzugsweise in diskreten Schritten, insbesondere pixelweise, positionierbar ist.

13. Geodätisches Messgerät (8,8') nach Anspruch 11 oder 12,
**dadurch gekennzeichnet, dass**
eine Steuerung der Richtmittel durch eine weitere Steuereinrichtung erfolgt.

14. Geodätisches Messgerät (8,8') nach einem der Ansprüche 11 bis 13,
**dadurch gekennzeichnet, dass**
durch eine Positionierung der Positionsmarke (3a) die Bestimmung von wenigstens einem Parameter des Messvorganges, insbesondere die Festlegung eines Messpunkts zur räumlichen Vermessung, und/oder die Steuerung der Aufnahmemittel (1a,1d) und/oder die Steuerung der Richtmittel bewirkt wird.

15. Geodätisches Messgerät (8,8') nach einem der Ansprüche 11 bis 14,
**dadurch gekennzeichnet, dass**
die visuelle Darstellung des erfassten Messbereichs (9) oder von Teilen des Messbereichs (9) durch die Aufnahmemittel (1a,1d) und/oder Darstellungsmittel (3) verkleinerbar, vergrösserbar und/oder in seiner Auflösung veränderbar ist, insbesondere durch eine Variation der, vorzugsweise elektronischen, Zuordnung der Daten von Pixeln der Aufnahmemittel (1a,1d) zu Pixeln der Darstellungsmittel (3).

16. Geodätisches Messgerät (8,8') nach einem der Ansprüche 11 bis 15,
**dadurch gekennzeichnet, dass**
durch eine automatische Nachführung der Aufnahmemittel (1a,1d) der zu erfassende Messbereich (9) so verändert werden kann, dass die Positionsmarke (3a) an einer ausgezeichneten Stelle in der visuellen Darstellung des zu erfassenden Messbereichs (9), insbesondere in dessen Mitte, positioniert wird.

17. Geodätisches Messgerät (8,8') nach einem der Ansprüche 11 bis 16,
**dadurch gekennzeichnet, dass**
die Darstellungsmittel (3) wenigstens eines der folgenden Mittel beinhaltet
- LCD-Display,
- Kathodenstrahlröhre,
- Flachbildschirm,
- Schnittstelle zu Kommunikationsnetzen,
- Elektronischer Rechner mit Bildschirm, vorzugsweise tragbarer Laptop.

18. Geodätisches Messgerät (8,8') nach einem der Ansprüche 11 bis 17,
**dadurch gekennzeichnet, dass**
die Eingabemittel wenigstens eines der folgenden Mittel beinhalten
- berührungssensitiven Bildschirm,
- berührungssensitives Eingabefeld,
- Tastaturfeld (4),
- Joy-Stick,
- Trackball,
- Computer-Maus,
- Schnittstelle zu Kommunikationsnetzen,
- Elektronischer Rechner mit Eingabevorrichtung, vorzugsweise tragbarer Laptop..

19. Geodätisches Messgerät (8,8') nach einem der Ansprüche 11 bis 18,
**dadurch gekennzeichnet, dass**
die elektronischen Darstellungsmittel (3) und die Eingabemittel in einer Komponente, vorzugsweise einem berührungssensitiven Flachbildschirm (6), zusammengefasst sind.

20. Geodätisches Messgerät (8,8') nach einem der Ansprüche 11 bis 19,
**dadurch gekennzeichnet, dass**
die Richtmittel eine, insbesondere aufsetzbare, Vorrichtung zum Ausrichten des geodätischen Messgeräts (8,8') bezüglich eines Referenzpunktes (10), vorzugsweise eines trigonometrischen Punktes, aufweisen, insbesondere in Zusammenhang mit einer Bewegung der Aufnahmemittel (1a,1d) aus der zur Erfassung des Messbereichs (9) notwendigen Orientierung in eine Orientierung zum Erfassen des Referenzpunktes (10).

21. Geodätisches Messgerät (8,8') nach einem der Ansprüche 11 bis 20,
**dadurch gekennzeichnet, dass**
die Aufnahmemittel (1a,1d), vorzugsweise unter Verwendung eines Autofokus, wenigstens eines der folgenden Mittel beinhalten
- CCD-Kamera,
- CMOS-Kamera,
- Video-Kamera,
- Restlichtverstärker,
- Wärmebildkamera,
- Spektral selektiver Detektor,
- Spektraler Filter.

22. Geodätisches Messgerät (8,8') nach einem der Ansprüche 11 bis 21,
**dadurch gekennzeichnet, dass**
die Eingabemittel und/oder die Darstellungsmittel (3) gegenüber einer Ausrichtung des geodätischen Messgeräts (8,8') unabhängig beweglich, insbesondere um eine horizontale Achse (A) schwenkbar, angebracht sind.

23. Modulkomponente für ein geodätisches Vermessungssystem mit integrierten Eingabemitteln und/oder Darstellungsmitteln (3) eines geodätischen Messgeräts nach einem der Ansprüche 11 bis 22, wobei diese als eigenständiges Modul ausgebildet und mit dem geodätischen Messgerät (8,8') und gegebenenfalls mit wenigstens einem weiteren geodätischen Messgerät (8,8') über eine Drahtverbindung (5) oder eine Funkverbindung verbunden sind.

24. Geodätisches Vermessungssystem,
mit mindestens zwei geodätischen Messgeräten (8,8') nach einem der Ansprüche 11 bis 22 und
mit mindestens einer Modulkomponente nach Anspruch 23, wobei die wenigstens eine Modulkomponente als gemeinsames Eingabemittel und/oder gemeinsames Darstellungsmittel (3) für die wenigstens zwei geodätischen Messgeräte (8,8'), gegebenenfalls unter deren alternierender Nutzung, ausgebildet ist.
